# EUROPÄISCHE PATENTSCHRIFT

(11) **EP 2 703 205 B1**
(45) Veröffentlichungstag und Bekanntmachung des Hinweises auf die Patenterteilung: **13.12.2017**
(21) Anmeldenummer: 13179882.9
(22) Anmeldetag: 09.08.2013
(51) Int. Cl.: B60K 35/00, B60K 37/06, G06F 3/01

(54) **Verfahren zum Anzeigen und Bedienen von Funktionsgruppen und/oder Funktionen sowie eine Anzeige- und Bedienvorrichtung**
Method for displaying and operating functional groups and/or functions and a display and operating device
Procédé d'affichage et de commande de groupes fonctionnels et/ou de fonctions ainsi que dispositif d'affichage et de commande

(30) Priorität: 30.08.2012 ES 201231345
(43) Veröffentlichungstag der Anmeldung: 05.03.2014
(73) Patentinhaber: Seat, S.A., 08760 Martorell - Barcelona (ES)
(72) Erfinder: Olavarria Abin, Leyre, 08760 Barcelona (ES); Rodriguez Bosch, Rubén, 08760 Barcelona (ES); Baños Serradilla, Victor, 08760 Barcelona (ES)
(74) Vertreter: Isern-Jara, Nuria

(56) Entgegenhaltungen:
- DE-A1-102006 040 707
- DE-A1-102007 054 239
- DE-C1- 3 514 438
- US-B1- 6 175 782

## Beschreibung

Die vorliegende Erfindung betrifft ein Verfahren zum Anzeigen und Bedienen von Funktionsgruppen und/oder Funktionen in einem Fahrzeug, wobei auf einer im wesentlichen rechteckigen Anzeigeeinrichtung Informationen zum Anzeigen und/oder Bedienen der Funktionsgruppen und/oder Funktionen dargestellt und/oder darstellbar sind, wobei von einer Steuereinrichtung Grafikdaten derart auf der Anzeigeeinrichtung erzeugt werden, dass zumindest ein Teil der dargestellten und/oder darstellbaren Informationen Bedienelemente zur Auswahl von Funktionsgruppen und/oder Funktionen sind, wobei die Bedienelemente als Schaltflächen ausgebildet sind und/oder ausgebildet werden. Ferner betrifft die Erfindung eine Anzeige- und Bedienvorrichtung für ein Fahrzeug einer im wesentlichen rechteckigen Anzeigeeinrichtung zum Anzeigen und/oder Bedienen dargestellter Funktionsgruppen und/oder Funktionen und einer Steuereinrichtung, die derart ausgebildet ist, dass auf der Anzeigeeinrichtung Grafikdaten derart erzeugt werden, dass zumindest ein Teil der dargestellten und/oder darstellbaren Informationen Bedienelemente zur Auswahl von Funktionsgruppen und/oder Funktionen sind, wobei die Bedienelemente als Schaltflächen ausgebildet sind,

Für eine Nutzerschnittstelle in einem Fahrzeug ergeben sich sehr spezielle Anforderungen. Die für die Bedienung erforderliche Informationsaufnahme erfolgt im Fahrzeug unter anderem durch den Fahrer. Die Information sollte somit im Fahrzeug so dargestellt werden, dass die Informationsaufnahme durch den Fahrer und auch die Bedienung an sich nicht zu einer Ablenkung während der Fahrt führt. Die dargestellten Informationen sollten daher intuitiv und schnell vom Fahrer erfassbar und auffindbar sein, so dass dieser für die Informationsaufnahme und Bedienung nur sehr kurzzeitig oder gar nicht den Blick vom Fahrgeschehen abwenden muss. Des Weiteren sollte der durch den Nutzer ausgeführte Bedienvorgang so schnell wie möglich ausführbar sein.

Mit der Zunahme elektronischer Einrichtungen im Fahrzeug wurde es erforderlich, eine größere Informationsmenge im Fahrzeug darzustellen. Moderne Fahrzeuge umfassen beispielsweise neben einer Multifunktionsanzeige- und Bedieneinrichtung für die Navigation eine Vielzahl von Fahrerassistenzsystemen, deren Informationen im Fahrzeug ebenfalls angezeigt und diese bedient werden müssen. Schließlich umfassen moderne Fahrzeuge vielfach Kommunikations- und Multimediaanwendungen, einschließlich einer Mobiltelefonschnittstelle und Einrichtungen zur Wiedergabe von Musik und Sprache. Auch für diese Anwendungen muss in dem Fahrzeug die Möglichkeit bestehen, Informationen und Funktionen anzuzeigen und zu bedienen.

Um die vielfältigen Informationen flexibel anzeigen zu können, werden z. B. frei programmierbare Anzeigeeinrichtungen eingesetzt, die häufig auch die Wiedergabe herkömmlicher mechanischer Instrumente übernehmen. In der DE 10 2006 032 118 A1 ist beispielsweise ein Kombiinstrument für ein Kraftfahrzeug beschrieben, welches eine Anzeigeeinrichtung umfasst, mit der variabel die Geschwindigkeit des Kraftfahrzeugs, die Drehzahl des Motors des Kraftfahrzeugs, die Temperatur des Motors des Kraftfahrzeugs, die Tankfüllung und/oder die Zeit angezeigt werden können. Außerdem ist es möglich, Informationen eines Navigationssystems, eines Telefons, einer Musikanlage und/oder einer Klimaanlage anzuzeigen.

Zusätzlich zu dem Kombiinstrument wird vielfach eine Anzeigevorrichtung oberhalb der Mittelkonsole des Fahrzeugs angeordnet, über welche weitere Informationen angezeigt werden können. Eine solche Multifunktionsanzeige ist beispielsweise in der DE 199 41 956 A1 beschrieben.

Sind die Schaltfläche für die Bedienung unterschiedlicher Funktionsgruppen und/oder Funktionen in variablen Positionen auf der Anzeigefläche angeordnet, ergibt sich das Problem, dass der Bedienvorgang ein höheres Maß an Zeit und Aufmerksamkeit vom Nutzer abverlangt.

Ein Verfahren bzw. eine Anzeige- und Bedienvorrichtung mit den Merkmalen des Oberbegriffs des Anspruchs 1 ist aus der DE 10 2007 054239 A1 bekannt.

Der vorliegenden Erfindung liegt die Aufgabe zugrunde, ein Verfahren und eine Anzeige- und Bedienvorrichtung der eingangs genannten Art bereitzustellen, mit welcher unterschiedliche Funktionsgruppen und/oder Funktionen für den Nutzer schnell und intuitiv eingestellt werden können.

Diese Aufgabe wird erfindungsgemäß durch ein Verfahren mit den Merkmalen des Anspruchs 1 und eine Anzeige- und Bedienvorrichtung mit den Merkmalen des Anspruchs 12 gelöst. Vorteilhafte Aus- und Weiterbildungen ergeben sich aus den abhängigen Ansprüchen.

Bei dem erfindungsgemäßen Verfahren werden von einer Steuervorrichtung Graphikdaten erzeugt, die die Anzeigeeinrichtung so ansteuern, dass zumindest ein Teil der Schaltflächen für Funktionsgruppen und/oder Funktionen in den Ecken der im wesentlichen rechteckigen Anzeigeeinrichtung abhängig von der in einem Informations- und Funktionsfeld dargestellten und bedienbaren Funktionsgruppe und/oder Funktion angeordnet dargestellt ist und/oder dargestellt wird.

Nach einer Ausgestaltung der Erfindung kann weiterhin vorgesehen sein, dass zumindest ein weiterer Teil der als Schaltflächen ausgebildeten Bedienelemente zwischen den in den Ecken der im wesentlichen rechteckigen Anzeigeeinrichtung angeordneten Schaltflächen am Rand der Anzeigeeinrichtung unabhängig von der in dem Informationsfeld dargestellten Funktionsgruppe und/oder Funktion angeordnet dargestellt ist und/oder dargestellt wird.

Beispielsweise kann ein sogenanntes Auswahlmenü dargestellt werden, in welchem die verschiedenen Funktionsgruppen und/oder Funktionen symbolisch innerhalb eines Informations- oder Funktionsfeld dargestellt werden. Außerdem, können mehrere erste Schaltflächen an den Ecken und weitere zweite Schaltflächen an den Rändern der Anzeigeeinrichtung zwischen den ersten eckig angeordneten Schaltflächen dargestellt werden. Zur Aktivierung der Schaltflächen durch ein Betätigungsobjekt wird die Position des Betätigungsobjekts auf der Anzeigefläche erfasst. Bei dem Betätigungsobjekt kann es sich insbesondere um einen Finger bzw. die Fingerspitze eines Nutzers, zum Beispiel des Fahrers des Fahrzeugs oder einen durch ein Multifunktionsbedienelement gesteuerten Cursor handeln. In Abhängigkeit der Aktivierung der Schaltfläche durch das Betätigungsobjekt werden unterschiedliche Informationen und/oder Funktionen angezeigt, die zu der über die Betätigung der Schaltfläche ausgelösten Funktionsgruppe oder Funktion gehören ausgelöst.

Vorzugsweise weist zumindest ein Teil der Schaltflächen an den Ecken und Rändern der Anzeigeeinrichtung nach ihrer Betätigung die gleiche graphische Darstellung und Information der Funktionsgruppe oder Funktion wie vor ihrer Betätigung auf, das heißt dieser Teil der Schaltflächen hat eine feste Zuordnung zu einer Funktionsgruppe oder Funktion.

Nach einer weiteren Ausgestaltung der Erfindung ändern andere Schaltflächen an den Ecken und/oder Rändern der Anzeigefläche ihre graphische Darstellung und die der Schaltfläche zugewiesene Funktionsgruppe oder Funktion in Abhängigkeit der Funktionsgruppe und/oder Funktion im Informations- und Funktionsfeld bzw. nach Aktivierung der Schaltfläche.

Bei dem erfindungsgemäßen Verfahren kann der Nutzer vorteilhafterweise Informationen oder Funktionen des Fahrzeugs auf sehr einfache, intuitive und schnelle Weise zuordnen. Bei der Auswahl der unterschiedlichen Funktionen wird er von der graphischen Darstellung bzw. Schaltflächen an den Ecken und Rändern der Anzeigefläche unterstützt. Der Nutzer kann, ohne den Blick vom Fahrgeschehen abwenden zu müssen, mit der Fingerspitze, die gleichzeitig das Betätigungsobjekt zur Bedienung der Anzeige- und Bedienvorrichtung ist, den Rand der Anzeigeeinrichtung abtasten und mit dem Tastsinn verfolgen bis die Position der gewünschten Schaltfläche auf der Anzeigeeinrichtung erreicht ist. Die physikalische Grenze zwischen dem Innenverkleidungsteil, beispielweise einer Mittelkonsole oder einer Instrumententafel, und der Anzeigeeinrichtung kann dabei als Orientierung genutzt werden.

Bei dem erfindungsgemäßen Verfahren werden vorzugsweise die Schaltflächen an den Ecken und Rändern der Anzeigeeinrichtung mit häufig zu benutzenden Funktionsgruppen oder Funktionen belegt.

Die Aktivierung der Schaltflächen wird gemäß eines Aspekts der Erfindung durch einen auf der Schaltfläche dargestellten Indikator oder ein auf der Schaltfläche dargestelltes Anzeigeelement angezeigt. Nach einer Ausgestaltung der Erfindung ist die Darstellung der Schaltflächen einem Tastschalter nachempfunden, dessen linienförmiger Indikator nach der Betätigung der Schaltfläche Funktion seine Farbe und/oder Lichtintensität ändert.

Nach einer weiteren vorteilhaften Ausgestaltung der Erfindung behält der Indikator auf der Schaltfläche die geänderte Farbe und/oder Lichtintensität solange bei, wie die Aktivierung der hinterlegten Funktionsgruppe oder Funktion bestehen bleibt

Die Darstellung der Schaltflächen an den Rändern oder an den Ecken der Anzeigeeinrichtung hat den Vorteil, dass sich der Betrachter noch einfacher und intuitiver bei der Auswahl einer bestimmten Funktionsgruppe und/oder Funktion orientieren kann. Der Nutzer lernt, an welchem Rand oder an welcher Ecke der Anzeigeeinrichtung welche Schaltfläche angeordnet ist und kann die Schaltfläche finden, ohne den Blick darauf zu richten.

Bei dieser Ausgestaltung des erfindungsgemäßen Verfahrens wird als Eingabeeinrichtung ein sogenannter Touchscreen verwendet. Durch Berührung des Touchscreens auf einer bestimmten Schaltfläche kann der Nutzer die auf der Schaltfläche hinterlegte Funktionsgruppe oder Funktion aufrufen. Dabei werden gegebenenfalls weiteren graphischen Objekte an die ausgewählte Funktion angepasst. Dies kann die Informationen oder Funktionen im Informations- und Funktionsfeld betreffen, aber auch die Schaltflächen auf den Ecken oder am Rand der Anzeigeeinrichtung, wobei dabei dann auch andere Funktionsgruppen oder Funktionen hinterlegt sein können.

Gemäß einer vorteilhaften Ausbildung der Erfindung sind auf dem an den Rändern der Anzeigeeinrichtung angeordneten Schaltflächen Funktionen wie Einstellungen, Telefon, Navigationssystem oder Hauptmenü fest hinterlegt. Die Schaltflächen auf den Ecken der Anzeigeeinrichtung dienen zur Aktivierung von Funktionsgruppen oder Funktionen des aktuellen Menüs, beispielsweise beim Musikmenü der Auswahl von Radio, Quelle der Mediadatei oder der Funktion "Zurück zum vorherigen Menüpunkt oder Menü.

Durch die Anordnung der Schaltflächen in den Ecken und/oder den Rändern der Anzeigeeinrichtung steht ein relativ große Fläche für das Informations- und Funktionsfeld auf der Anzeigeeinrichtung zur Verfügung, so dass der Nutzer, insbesondere der Fahrer des Fahrzeugs, diese Informationen visuell schnell erfassen kann.

Die erfindungsgemäße Anzeige- und Bedieneinrichtung in einem Fahrzeug weist eine im wesentlichen rechteckige Anzeigeeinrichtung zum Anzeigen und Bedienen dargestellter Funktionsgruppen und/oder Funktionen und eine Steuereinrichtung auf, wobei die Steuereinrichtung derart ausgebildet ist, dass auf der Anzeigeeirichtung Grafikdaten derart erzeugt werden, dass zumindest ein Teil der dargestellten und/oder darstellbaren Informationen Bedienelemente zur Auswahl von Funktionsgruppen und/oder Funktionen darstellen. Die Bedienelemente sind dabei als Schaltflächen auf der Anzeigeeinrichtung ausgebildet und werden durch ein Betätigungsobjekt ausgewählt. Erfindungsgemäß ist die Steuereinrichtung weiterhin derart ausgebildet, dass Grafikdaten derart erzeugbar sind und/oder erzeugt werden, dass zumindest ein Teil der Schaltflächen in den Ecken der im wesentlichen rechteckigen Anzeigeeinrichtung abhängig von in einem im Wesentlichen mittig angeordneten Informations-und Funktionsfeld dargestellten Funktionsgruppen und/oder Funktionen angeordnet dargestellt sind.

Gemäß einer Weiterbildung der erfindungsgemäßen Vorrichtung ist die Steuereinrichtung weiterhin derart ausgebildet, dass Grafikdaten derart erzeugbar sind und/oder erzeugt werden, dass zumindest ein Teil der als Schaltflächen ausgebildeten Bedienelemente zwischen den in den Ecken der im Wesentlichen rechteckigen Anzeigeeinrichtung angeordneten Schaltflächen am Rand der Anzeigeeinrichtung unabhängig von in einem im Wesentlichen mittig angeordneten Informations- und Funktionsfeld dargestellten Funktionsgruppen und/oder Funktionen angeordnet dargestellt sind.

Die erfindungsgemäße Vorrichtung ist insbesondere zum Durchführen des erfindungsgemäßen Verfahrens geeignet. Sie weist somit auch die Vorteile des erfindungsgemäßen Verfahrens auf.

Die Erfindung wird nun anhand eines Ausführungsbeispiels näher erläutert.
- Figur 1: zeigt die Anordnung einer Ausbildung der erfindungsgemäßen Anzeige- und Bedieneinrichtung in einem Fahrzeug,
- Figur 2: zeigt schematisch den Prinzipaufbau der erfindungsgemäßen Anzeige- und Bedienvorrichtung und deren Kopplung mit anderen Einrichtungen des Fahrzeugs,
- Figur 3: zeigt eine mögliche Darstellung eines Hauptmenüs auf der Anzeige- und Bedienvorrichtung,
- Figur 4: zeigt eine andere Darstellung eines Menüpunktes auf der Anzeigeeinrichtung der erfindungsgemäßen Anzeige- und Bedienvorrichtung und
- Figur 5: zeigt eine dritte Darstellung eines Menüpunktes auf der Anzeigeeinrichtung der erfindungsgemäßen Anzeige- und Bedienvorrichtung.

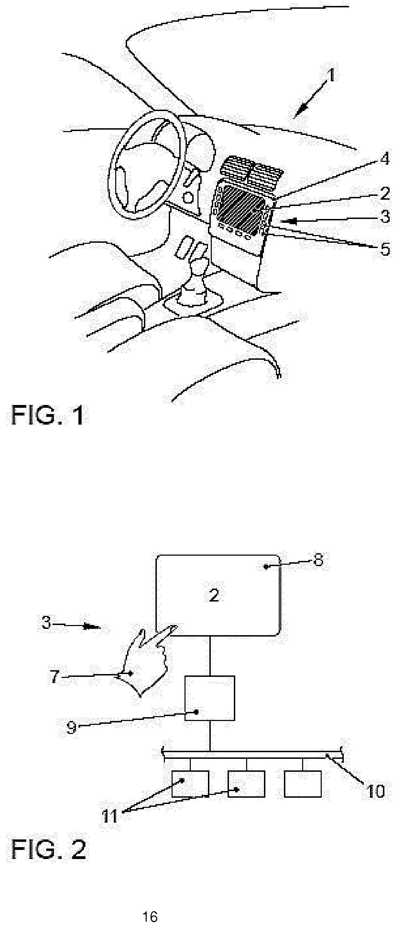

In Figur 1 ist die Anordnung einer möglichen Ausbildung der erfindungsgemäßen Anzeige- und Bedieneinrichtung 3 gezeigt. In einem Innenverkleidungsteil 4, beispielweise einer Mittelkonsole oder einer Instrumententafel, des Fahrzeugs 1 ist die Anzeige- und Bedienvorrichtung 3 mit einer als Touchscreen ausgebildeten Anzeigeeinrichtung 2 angeordnet, so dass der Fahrer als auch der Beifahrer die Anzeigeeinrichtung gut einsehen und bedienen kann. Außerdem weist die Anzeige- und Bedieneinrichtung in diesem Ausführungsbeispiel Tastschalter 5 (sogenannte Hardkeys) für verschiedene Funktionen auf.

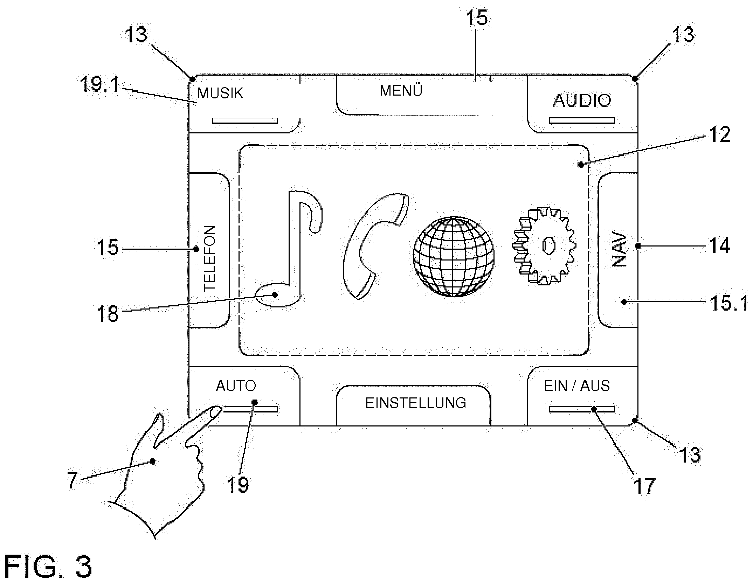

Im Folgenden wird der Aufbau eines Ausführungsbeispiels der erfindungsgemäßen Anzeige- und Bedienvorrichtung 3 mit Bezug auf Figur 2 im Detail erläutert. Die Vorrichtung weist eine im wesentlichen rechteckige Anzeigeeinrichtung (Touchscreen) 2 zum Anzeigen von Informationen und Schaltflächen für Funktionsgruppen und/oder Funktionen auf, die durch Berühren der berührungsempfindlichen Oberfläche 8 ausgewählt und bedient werden können. Insbesondere können auf der Anzeigeeinrichtung 2 Objekte 18 und Schaltflächen 19, 15 dargestellt werden, wie dies im Zusammenhang mit dem erfindungsgemäßen Verfahren mit Bezug auf die Figuren 3 - 5 noch näher beschrieben wird. Die Anzeigeeinrichtung 2 kann von einem Display beliebiger Bauart bereitgestellt werden.

Auf der Anzeigeeinrichtung 2 ist eine berührungsempfindliche Oberfläche 8 ausgebildet, so dass auf an sich bekannte Weise ein sogenannter Touchscreen bereitgestellt wird. Die berührungsempfindliche Oberfläche 8 stellt dabei eine Eingabeeinrichtung dar. Der Nutzer kann mit einem Betätigungsobjekt, zum Beispiel mit seiner Fingerspitze 7, die berührungsempfindliche Oberfläche 8 berühren und die einzelnen Schaltflächen 15, 19 aktivieren, dabei wird die Position der Berührung erfasst und in Verbindung mit dem dargestellten Anzeigeinhalt werden Eingabesignale erzeugt.

Die Anzeigeeinrichtung 2 ist mit einer Steuervorrichtung 9 gekoppelt. Die Steuervorrichtung 9 erzeugt zum einen Graphikdaten, welche an die Anzeigeeinrichtung 2 übertragen werden und mittels welcher eine beliebige Anzeige auf der Anzeigeeinrichtung 2 erzeugt wird. Zum anderen werden der Steuervorrichtung 9 Daten zu den Positionen übertragen, an denen ein Betätigungsobjekt, wie die Fingerspitze 7 des Nutzers, die berührungsempfindliche Oberfläche 8 berührt.

Die Steuervorrichtung 9 ist ferner über einen Datenbus 10 des Fahrzeugs 1 mit weiteren Einrichtungen 11 des Fahrzeugs 1 gekoppelt.

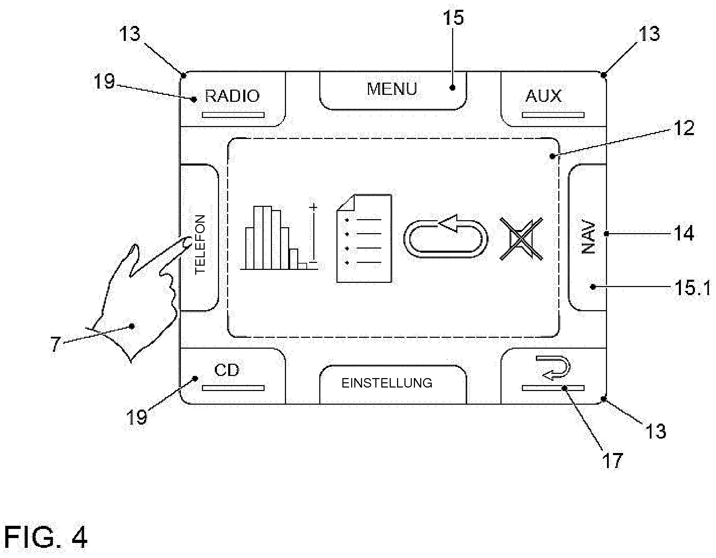

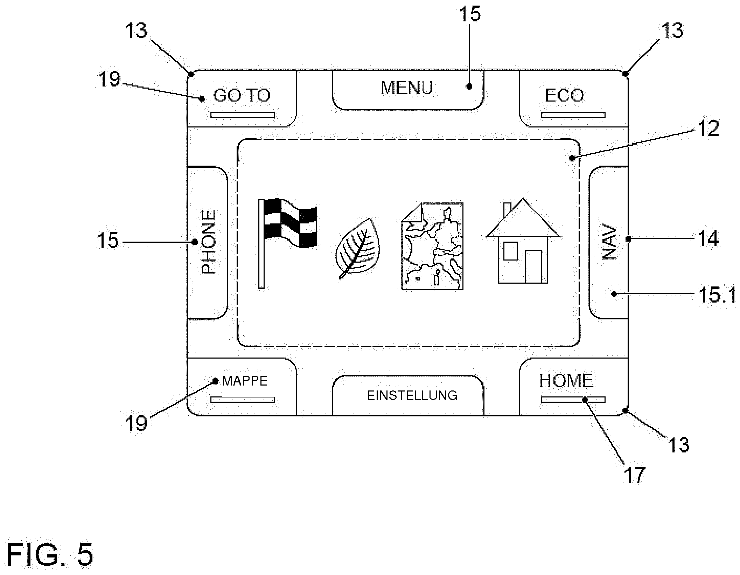

Dem Nutzer stehen durch die von der Steuervorrichtung 9 erzeugten Informationsanzeigen und Schaltflächen 19, 15 auf der Anzeigeeinrichtung 2 Bedienmöglichkeiten für Funktionsgruppen und Funktionen zur Verfügung, wie im Folgenden mit Bezug auf die Figuren 3 bis 5 an Hand des Ausführungsbeispiels des erfindungsgemäßen Verfahrens erläutert wird:
Berührt der Nutzer eine bestimmte Schaltflächen 19, 15 mit seinem Finger 7, ausgehend von dem in Fig. 3 dargestellten Hauptmenü wechselt die Darstellung des Hauptmenüs in eine Darstellung, wie beispielsweise in den Figuren 4 und 5 dargestellt.

In der Darstellung des Hauptmenüs sind im Informations- und Funktionsfeld 12 verschiedene graphische Objekten 18 dargestellt, die einzelne Menüpunkte repräsentieren. Dies können beispielsweise, wie in Fig. 3 gezeigt, eine Musiknote für das Audiomenü, ein Telefon für das Telefonmenü, ein Weltglobus für das Navigationsmenü und ein Zahnrad für das Menü Fahrzeugeinstellungen sein. In Abhängigkeit dazu, werden in den Ecken 13 und an den Rändern 14 der Anzeigeeinrichtung 2 Schaltflächen 19 und 15 dargestellt. Unabhängig von den graphischen Objekte 18, die im Informations- und/oder Funktionsfeld 12 angezeigt werden und nur der Information dienen, kann der Nutzer über diese Schaltflächen 19 und 15 die einzelnen Menüs auswählen. Wenn der Nutzer durch eine Betätigung beispielsweise auf die Schaltfläche 19.1 auf der Anzeigeeinrichtung 2 mit der Funktion "Music" drückt, werden neue graphische Objekte 18 in die Informations- und/oder Funktionsfeld 12 von der Steuervorrichtung 9 erzeugt, wie in Fig. 4 gezeigt.

Mit den neuen graphischen Objekten 18 erhalten auch die davon abhängigen Schaltflächen 19 neue Darstellungen und sind mit neuen Funktionen belegt. Die unabhängigen Schaltflächen 15 behalten die gleiche Darstellung und Funktion.

Wenn der Nutzer die Schaltfläche 15.1 am Rand 14 der Anzeigeeinrichtung 2 mit der Funktion "Nav" betätigt, werden ebenfalls neue graphische Objekte 18 im Informations- und Funktionsfeld 12 von der Steuervorrichtung 9 erzeugt, wie in Fig. 5 gezeigt. Auch hier werden die Schaltflächen 19 in den Ecken der Anzeigeeinrichtung 2 mit neuen Funktionen, hier mit Funktionen oder Auswahlmöglichkeiten des Navigationsmenüs belegt.

Zusätzlich weisen zumindest die Schaltflächen 19 Indikatoren 17 auf, die die erfolgreiche Betätigung der Schaltfläche bzw. Den Aktivzustand der hinterlegten Funktionsgruppe oder Funktion wiedergeben. So kann vorgesehen sein, dass während der Betätigung einer Schaltoberfläche 15 oder 19 sich die Farbe und/oder die Helligkeit des Indikators 17 ändert.

Wenn die der Schaltfläche zugeordnete Funktion dauerhaft aktiviert bleibt auch die Änderung der Farbe und/oder der Helligkeit des Indikators 17 während der Dauer der Aktivierung bestehen. Das erfinderische Verfahren und die Anordnung der Schaltflächen 19, 15 sowie das Informations-und Funktionsfeld 12 ist auch für nicht dargestellte Menüpunkte analog anwendbar.

### Bezugszeichenliste

- 1: Fahrzeug
- 2: Anzeigeeinrichtung (sogenannte Touchscreen)
- 3: Anzeige- und Bedienvorrichtung
- 4: Innenverkleidungsteil
- 5: Tastschalter (sogenannte Hardkeys)
- 7: Betätigungsobjekt, Fingerspitze eines Nutzers
- 8: berührungsempfindliche Oberfläche
- 9: Steuervorrichtung
- 10: Datenbus
- 11: Einrichtungen des Fahrzeuges 1
- 12: Informations- und/oder Funktionsfeld
- 13: Ecke der Anzeigeeinrichtung 2
- 14: Rand der Anzeigeeinrichtung 2
- 15: Schaltflächen
- 15.1: Schaltfläche "Nav"
- 17: Indikator in der Schaltfläche 19
- 18: graphisches Objekt
- 19: Schaltflächen
- 19.1: Schaltfläche "Music"

## Patentansprüche

1. Verfahren zum Anzeigen und Bedienen von Funktionsgruppen und/oder Funktionen in einem Fahrzeug (1), wobei auf einer im wesentlichen rechteckigen Anzeigeeinrichtung (2) Informationen zum Anzeigen und/oder Bedienen der Funktionsgruppen und/oder Funktionen dargestellt sind, wobei von einer Steuereinrichtung (9) Grafikdaten derart auf der Anzeigeeinrichtung (2) erzeugt werden, dass zumindest ein Teil der dargestellten Informationen Bedienelemente zur Auswahl von Funktionsgruppen und/oder Funktionen sind, wobei die Bedienelemente als Schaltflächen (15, 19) ausgebildet sind und/oder ausgebildet werden,
**dadurch gekennzeichnet, dass** ein Teil der Schaltflächen (19) in den Ecken (13) der im wesentlichen rechteckigen Anzeigeeinrichtung (2) abhängig von der in einem Informations- und Funktionsfeld (12) dargestellten und bedienbaren Funktionsgruppe und/oder Funktion dargestellt wird und ein Teil der Schaltflächen (15) unabhängig davon dargestellt wird, wobei durch eine Betätigung einer der Schaltflächen (15, 19) neue graphische Objekte (18) in dem Informations- und Funktionsfeld (12) von der Steuereinrichtung erzeugt werden.

2. Verfahren nach Anspruch 1,
**dadurch gekennzeichnet, dass** als Schaltflächen ausgebildeten Bedienelemente (15) zwischen den in den Ecken der im wesentlichen rechteckigen Anzeigeeinrichtung (2) angeordneten Schaltflächen (19) am Rand der Anzeigeeinrichtung dargestellt werden, und dass dieses die Bedienelemente sind, die unabhängig von der in dem Informations- und Funktionsfeld (12) dargestellten und bedienbaren Funktionsgruppe und/oder Funktion angeordnet dargestellt werden.

3. Verfahren nach Ansprüche 1 bis 2,
**dadurch gekennzeichnet, dass** zumindest eine in den Ecken der Anzeigeeinrichtung dargestellte Schaltfläche (19) zur Auswahl von festen Funktionsgruppen und/oder Funktionen vorgesehen ist, unabhängig von der in dem Informations- und Funktionsfeld (12) dargestellten und bedienbaren Funktionsgruppe.

4. Verfahren nach Ansprüche 1 bis 3,
**dadurch gekennzeichnet, dass**
zwei der am Rand der Anzeigeeinrichtung dargestellten und als Schaltflächen ausgebildeten Bedienelemente (15) zur Auswahl von festen Funktionsgruppen und/oder Funktionen vorgesehen sind, unabhängig von der in dem Informations- und Funktionsfeld (12) dargestellten und bedienbaren Funktionsgruppe.

5. Verfahren nach Ansprüche 1 bis 4,
**dadurch gekennzeichnet, dass**
zwei der in den Ecken der Anzeigeeinrichtung dargestellten Schaltflächen (19) zur Auswahl von unterschiedlichen Funktionsgruppen und/oder Funktionen abhängig von der in dem Informations- und Funktionsfeld (12) dargestellten und bedienbaren Funktionsgruppe vorgesehen sind.

6. Verfahren nach Ansprüche 1 bis 5,
**dadurch gekennzeichnet, dass**
zwei der am Rand der Anzeigeeinrichtung dargestellten und als Schaltflächen ausgebildeten Bedienelemente (15) zur Auswahl von unterschiedlichen Funktionsgruppen und/oder Funktionen abhängig von der in dem Informations- und Funktionsfeld (12) dargestellten und bedienbaren Funktionsgruppe vorgesehen sind.

7. Verfahren nach einem der Ansprüche 1 bis 6,
**dadurch gekennzeichnet, dass**
eine erfolgreiche Betätigung der Schaltflächen (15, 19) durch ein Betätigungsobjekt (7) eine Änderung in der graphischen Darstellung der Schaltflächen (19, 15) während der Betätigung bewirkt.

8. Verfahren nach einem der Ansprüche 1 bis 8,
**dadurch gekennzeichnet, dass**
eine bleibende Aktivierung einer Funktion einer der Schaltflächen (15, 19) eine Änderung in der graphische Darstellung der Schaltfläche (19, 15) bewirkt.

9. Verfahren nach Anspruch 7 oder 8,
**dadurch gekennzeichnet, dass**
die Änderung in der graphischen Darstellung durch einen Indikator (17) auf der Schaltfläche (15, 19), erzeugt wird, der seine Farbe und/oder Lichtintensität ganz oder teilweise ändert.

10. Verfahren nach Anspruch 1 bis 9,
**dadurch gekennzeichnet, dass**
die im Wesentlichen rechteckigen Anzeigeeinrichtung (2) zumindest teilweise eine berührungsempfindliche Oberfläche (8) aufweist.

11. Verfahren nach Anspruch 1 bis 10,
**dadurch gekennzeichnet, dass**
das Betätigungsobjekt (7) zur Bedienung der Schaltflächen ein Multifunktionsbedienelement ist.

12. Anzeige- und Bedienvorrichtung (3) für ein Fahrzeug (1) mit einer im wesentlichen rechteckigen Anzeigeeinrichtung (2) zum Anzeigen und/oder Bedienen dargestellter Funktionsgruppen und/oder Funktionen und einer Steuereinrichtung (9), die derart ausgebildet ist, dass auf der Anzeigeeinrichtung (2) Grafikdaten derart erzeugt werden, dass zumindest ein Teil der dargestellten Informationen
Bedienelemente zur Auswahl von Funktionsgruppen und/oder Funktionen sind, wobei die Bedienelemente als Schaltflächen (15, 19) ausgebildet sind,
**dadurch gekennzeichnet, dass**
die Steuereinrichtung weiterhin derart ausgebildet ist, dass Grafikdaten derart erzeugbar sind und/oder erzeugt werden, dass ein Teil der Schaltflächen (19) in den Ecken (13) der im wesentlichen rechteckigen Anzeigeeinrichtung (2) abhängig von der in einem Informations- und Funktionsfeld (12) dargestellten Funktionsgruppe und/oder Funktion dargestellt ist und ein Teil der Schaltflächen (15) unabhängig davon dargestellt ist, wobei bei Betätigung einer der Schaltflächen (15, 19) neue graphische Objekte (18) in dem Informations-und Funktionsfeld (12) erzeugt werden.

13. Anzeige- und Bedienvorrichtung (3) nach Anspruch 12,
**dadurch gekennzeichnet, dass**
die Steuereinrichtung weiterhin derart ausgebildet ist, dass Grafikdaten derart erzeugbar sind und/oder erzeugt werden, dass als Schaltflächen (15) ausgebildeten Bedienelemente zwischen den in den Ecken (13) der im wesentlichen rechteckigen Anzeigeeinrichtung (2) angeordneten Schaltflächen (19) am Rand der Anzeigeeinrichtung (2) dargestellt sind, und dass dieses die Bedienelemente sind, die unabhängig von der in dem Informations- und Funktionsfeld (12) dargestellten und bedienbaren Funktionsgruppe und/oder Funktion angeordnet dargestellt sind.

14. Anzeige- und Bedienvorrichtung (3) nach Ansprüche 12 oder 13,
**dadurch gekennzeichnet, dass**
die Steuereinrichtung weiterhin derart ausgebildet ist, dass Grafikdaten derart erzeugbar sind und/oder erzeugt werden, dass zumindestens eine in den Ecken der Anzeigeeinrichtung dargestellte Schaltfläche (19) zur Auswahl von festen Funktionsgruppen und/oder Funktionen vorgesehen ist, unabhängig von der in dem Informations- und Funktionsfeld (12) dargestellten und bedienbaren Funktionsgruppe.

15. Anzeige- und Bedienvorrichtung (3) nach einem der Ansprüche 12 bis 14,
**dadurch gekennzeichnet, dass**
die Steuereinrichtung weiterhin derart ausgebildet ist, dass Grafikdaten derart erzeugbar sind und/oder erzeugt werden, dass zwei der am Rand der Anzeigeeinrichtung dargestellten und als Schaltflächen ausgebildeten Bedienelemente (15) zur Auswahl von festen Funktionsgruppen und/oder Funktionen vorgesehen sind, unabhängig von der in dem Informations- und Funktionsfeld (12) dargestellten und bedienbaren Funktionsgruppe.

16. Anzeige- und Bedienvorrichtung (3) nach Anspruch 12 bis 15,
**dadurch gekennzeichnet, dass**
die Steuereinrichtung weiterhin derart ausgebildet ist, dass Grafikdaten derart erzeugbar sind und/oder erzeugt werden, dass zwei der in den Ecken der Anzeigeeinrichtung dargestellten Schaltflächen (19) zur Auswahl von unterschiedlichen Funktionsgruppen und/oder Funktionen abhängig von der in dem Informations- und Funktionsfeld (12) dargestellten und bedienbaren Funktionsgruppe vorgesehen sind.

17. Anzeige- und Bedienvorrichtung (3) nach einem der Ansprüche 12 bis 16,
**dadurch gekennzeichnet, dass**
die Steuereinrichtung weiterhin derart ausgebildet ist, dass Grafikdaten derart erzeugbar sind und/oder erzeugt werden, dass zwei der in am Rand der
Anzeigeeinrichtung dargestellten und als Schaltflächen ausgebildeten Bedienelemente (15) zur Auswahl von unterschiedlichen Funktionsgruppen und/oder Funktionen abhängig von der in dem Informations- und Funktionsfeld (12) dargestellten und bedienbaren Funktionsgruppe vorgesehen sind.

18. Anzeige- und Bedienvorrichtung (3) nach einem der Ansprüche 12 bis 17,
**dadurch gekennzeichnet, dass**
die Steuereinrichtung weiterhin derart ausgebildet ist, dass Grafikdaten derart erzeugbar sind und/oder erzeugt werden, dass eine erfolgte Betätigung vom Schaltflächen (15, 19) durch ein Betätigungsobjekt (7) eine Änderung in der graphischen Darstellung der Schaltflächen (19, 15) während der Betätigung bewirkt.

19. Anzeige- und Bedienvorrichtung (3) nach einem der Ansprüche 12 bis 18,
**dadurch gekennzeichnet, dass**
die Steuereinrichtung weiterhin derart ausgebildet ist, dass Grafikdaten derart erzeugbar sind und/oder erzeugt werden, dass eine bleibende Aktivierung einer Funktion einer der Schaltflächen (15, 19) eine Änderung in der graphischen Darstellung der Schaltflächen (19, 15) bewirkt.

20. Anzeige- und Bedienvorrichtung (3) nach Anspruch 12 bis 19,
**dadurch gekennzeichnet, dass**
die Steuereinrichtung weiterhin derart ausgebildet ist, dass Grafikdaten derart erzeugbar sind und/oder erzeugt werden, dass die Änderung in der graphischen Darstellung durch einen Indikator (17) auf der Schaltfläche (15, 19) erzeugt wird, der seine Farbe und/oder Lichtintensität ganz oder teilweise ändert.

21. Anzeige- und Bedienvorrichtung (3) nach Anspruch 12 bis 20,
**dadurch gekennzeichnet, dass**
die im Wesentlichen rechteckige Anzeigeeinrichtung (2) eine berührungsempfindliche Oberfläche (8) aufweist.

22. Anzeige- und Bedienvorrichtung (3) nach Anspruch 12 bis 21,
**dadurch gekennzeichnet, dass**
das Betätigungsobjekt (7) zur Bedienung der Funktionsgruppen und/oder Funktionen ein Multifunktionsbedienelement ist.

## Claims

1. Method for displaying and operating functional groups and/or functions in a vehicle (1), information for displaying and/or operating the functional groups and/or functions being displayed on a substantially rectangular display device (2), a control device (9) generating graphics data on the display device (2) in such a manner that at least some of the displayed information is operating elements for selecting functional groups and/or functions, the operating elements being in the form of and/or being formed as buttons (15, 19),
**characterized in that**
some of the buttons (19) are displayed in the corners (13) of the substantially rectangular display device (2) depending on the functional group and/or function which can be operated and is/are displayed in an information and functional field (12), and some of the buttons (15) are displayed independently thereof, new graphical objects (18) being generated by the control device in the information and functional field (12) as a result of actuation of one of the buttons (15, 19) .

2. Method according to Claim 1,
**characterized in that**
operating elements (15) in the form of buttons are displayed at the edge of the display device between the buttons (19) arranged in the corners of the substantially rectangular display device (2), and **in that** these are the operating elements which are displayed in a manner arranged independently of the functional group and/or function which can be operated and is/are displayed in the information and functional field (12) .

3. Method according to Claims 1 to 2,
**characterized in that**
at least one button (19) displayed in the corners of the display device is provided for the purpose of selecting fixed functional groups and/or functions independently of the functional group which can be operated and is displayed in the information and functional field (12).

4. Method according to Claims 1 to 3,
**characterized in that**
two of the operating elements (15) which are displayed at the edge of the display device and are in the form of buttons are provided for the purpose of selecting fixed functional groups and/or functions independently of the functional group which can be operated and is displayed in the information and functional field (12).

5. Method according to Claims 1 to 4,
**characterized in that**
two of the buttons (19) displayed in the corners of the display device are provided for the purpose of selecting different functional groups and/or functions depending on the functional group which can be operated and is displayed in the information and functional field (12).

6. Method according to Claims 1 to 5,
**characterized in that**
two of the operating elements (15) which are displayed at the edge of the display device and are in the form of buttons are provided for the purpose of selecting different functional groups and/or functions depending on the functional group which can be operated and is displayed in the information and functional field (12).

7. Method according to one of Claims 1 to 6,
**characterized in that**
successful actuation of the buttons (15, 19) by means of an actuation object (7) causes a change in the graphical display of the buttons (19, 15) during actuation.

8. Method according to one of Claims 1 to 8, **characterized in that**
lasting activation of a function of one of the buttons (15, 19) causes a change in the graphical display of the button (19, 15).

9. Method according to Claim 7 or 8,
**characterized in that**
the change in the graphical display is produced by an indicator (17) on the button (15, 19), which indicator completely or partially changes its colour and/or light intensity.

10. Method according to Claims 1 to 9,
**characterized in that**
the substantially rectangular display device (2) at least partially has a touch-sensitive surface (8) .

11. Method according to Claims 1 to 10,
**characterized in that**
the actuation object (7) for operating the buttons is a multi-functional operating element.

12. Display and operating apparatus (3) for a vehicle (1), having a substantially rectangular display device (2) for displaying and/or operating displayed functional groups and/or functions and a control device (9) which is designed in such a manner that graphics data are generated on the display device (2) in such a manner that at least some of the displayed information is operating elements for selecting functional groups and/or functions, the operating elements being in the form of buttons (15, 19),
**characterized in that**
the control device is also designed in such a manner that graphics data can be generated and/or are generated in such a manner that some of the buttons (19) are displayed in the corners (13) of the substantially rectangular display device (2) depending on the functional group and/or function displayed in an information and functional field (12), and some of the buttons (15) are displayed independently thereof, new graphical objects (18) being generated in the information and functional field (12) upon actuation of one of the buttons (15, 19).

13. Display and operating apparatus (3) according to Claim 12,
**characterized in that**
the control device is also designed in such a manner that graphics data can be generated and/or are generated in such a manner that operating elements in the form of buttons (15) are displayed at the edge of the display device (2) between the buttons (19) arranged in the corners (13) of the substantially rectangular display device (2), and **in that** these are the operating elements which are displayed in a manner arranged independently of the functional group and/or function which can be operated and is/are displayed in the information and functional field (12).

14. Display and operating apparatus (3) according to Claim 12 or 13,
**characterized in that**
the control device is also designed in such a manner that graphics data can be generated and/or are generated in such a manner that at least one button (19) displayed in the corners of the display device is provided for the purpose of selecting fixed functional groups and/or functions independently of the functional group which can be operated and is displayed in the information and functional field (12).

15. Display and operating apparatus (3) according to one of Claims 12 to 14,
**characterized in that**
the control device is also designed in such a manner that graphics data can be generated and/or are generated in such a manner that two of the operating elements (15) which are displayed at the edge of the display device and are in the form of buttons are provided for the purpose of selecting fixed functional groups and/or functions independently of the functional group which can be operated and is displayed in the information and functional field (12).

16. Display and operating apparatus (3) according to Claims 12 to 15,
**characterized in that**
the control device is also designed in such a manner that graphics data can be generated and/or are generated in such a manner that two of the buttons (19) displayed in the corners of the display device are provided for the purpose of selecting different functional groups and/or functions depending on the functional group which can be operated and is displayed in the information and functional field (12).

17. Display and operating apparatus (3) according to one of Claims 12 to 16,
**characterized in that**
the control device is also designed in such a manner that graphics data can be generated and/or are generated in such a manner that two of the operating elements (15) which are displayed at the edge of the display device and are in the form of buttons are provided for the purpose of selecting different functional groups and/or functions depending on the functional group which can be operated and is displayed in the information and functional field (12).

18. Display and operating apparatus (3) according to one of Claims 12 to 17,
**characterized in that**
the control device is also designed in such a manner that graphics data can be generated and/or are generated in such a manner that actuation of buttons (15, 19) by means of an actuation object (7) causes a change in the graphical display of the buttons (19, 15) during actuation.

19. Display and operating apparatus (3) according to one of Claims 12 to 18,
**characterized in that**
the control device is also designed in such a manner that graphics data can be generated and/or are generated in such a manner that lasting activation of a function of one of the buttons (15, 19) causes a change in the graphical display of the buttons (19, 15).

20. Display and operating apparatus (3) according to Claims 12 to 19,
**characterized in that**
the control device is also designed in such a manner that graphics data can be generated and/or are generated in such a manner that the change in the graphical display is produced by an indicator (17) on the button (15, 19), which indicator completely or partially changes its colour and/or light intensity.

21. Display and operating apparatus (3) according to Claims 12 to 20,
**characterized in that**
the substantially rectangular display device (2) has a touch-sensitive surface (8).

22. Display and operating apparatus (3) according to Claims 12 to 21,
**characterized in that**
the actuation object (7) for operating the functional groups and/or functions is a multi-functional operating element.

## Revendications

1. Procédé d'affichage et de commande de groupes de fonctions et/ou de fonctions dans un véhicule (1), dans lequel des informations destinées à afficher et/ou commander des groupes de fonctions et/ou de fonctions sont représentées sur un dispositif d'affichage (2) sensiblement rectangulaire, dans lequel des données graphiques sont générées sur le dispositif d'affichage (2) par un dispositif de commande (9) de manière à ce qu'au moins une partie des informations représentées soient des éléments de commande destinés à la sélection de groupes de fonctions et/ou de fonctions, dans lequel les éléments de commande sont réalisés et/ou sont amenés à être réalisés sous la forme de surfaces de commutation (15, 19),
**caractérisé en ce qu'**une partie des surfaces de commutation (19) est représentée aux angles (13) du dispositif d'affichage (2) sensiblement rectangulaire en fonction du groupe de fonctions et/ou de la fonction représenté et pouvant être commandé dans un champ d'information et de fonction (12) et **en ce qu'**une partie des surfaces de commutation (15) est représentée indépendamment de cela, dans lequel de nouveaux objets graphiques (18) sont générés dans le champ d'information et de fonction (12) du dispositif de commande par un actionnement de l'une des surfaces de commutation (15, 19).

2. Procédé selon la revendication 1,
**caractérisé en ce que** des éléments de commande (15) réalisés sous la forme de surfaces de commutation sont représentés sur le bord du dispositif d'affichage entre les surfaces de commutation (19) disposées aux angles du dispositif d'affichage (2) sensiblement rectangulaire, et **en ce que** ceux-ci sont les éléments de commande qui sont représentés de manière à ce qu'ils soient disposés indépendamment du groupe de fonctions et/ou de la fonction représenté et pouvant être commandé dans le champ d'information et de fonction (12) .

3. Procédé selon les revendications 1 à 2, **caractérisé en ce qu'**au moins une surface de commutation (19) représentée aux angles du dispositif d'affichage est prévue pour la sélection de groupes de fonctions et/ou de fonctions fixes, indépendamment du groupe de fonctions représenté et pouvant être commandé dans le champ d'information et de fonction (12).

4. Procédé selon les revendications 1 à 3, **caractérisé en ce que** deux des éléments de commande (15) représentés sur le bord du dispositif d'affichage et réalisés sous la forme de surfaces de commutation sont prévus pour la sélection de groupes de fonctions et/ou de fonctions fixes, indépendamment du groupe de fonctions représenté et pouvant être commandé dans le champ d'information et de fonction (12).

5. Procédé selon les revendications 1 à 4, **caractérisé en ce que** deux des surfaces de commutation (19) représentées aux angles du dispositif d'affichage sont prévues pour la sélection de différents groupes de fonctions et/ou de différentes fonctions en fonction du groupe de fonctions représenté et pouvant être commandé dans le champ d'information et de fonction (12).

6. Procédé selon les revendications 1 à 5, **caractérisé en ce que** deux des éléments de commande (15) représentés sur le bord du dispositif d'affichage et réalisés sous la forme de surfaces de commutation sont prévus pour la sélection de différents groupes de fonctions et/ou de différentes fonctions en fonction du groupe de fonctions représenté et pouvant être commandé dans le champ d'information et de fonction (12).

7. Procédé selon l'une quelconque des revendications 1 à 6,
**caractérisé en ce qu'**un actionnement réussi des surfaces de commutation (15, 19) par un objet d'actionnement (7) provoque une modification de la représentation graphique des surfaces de commutation (19, 15) pendant l'actionnement.

8. Procédé selon l'une quelconque des revendications 1 à 8,
**caractérisé en ce qu'**une activation permanente d'une fonction de l'une des surfaces de commutation (15, 19) provoque une modification de la représentation graphique de la surface de commutation (19, 15).

9. Procédé selon la revendication 7 ou 8, **caractérisé en ce que** la modification de la représentation graphique est générée sur la surface de commutation (15, 19) par un indicateur (17) qui modifie entièrement ou partiellement sa couleur et/ou son intensité lumineuse.

10. Procédé selon les revendications 1 à 9, **caractérisé en ce que** le dispositif d'affichage (2) sensiblement rectangulaire comporte au moins partiellement une surface tactile (8).

11. Procédé selon les revendications 1 à 10, **caractérisé en ce que** l'objet d'actionnement (7) est un élément de commande multifonction destiné à commander les surfaces de commutation.

12. Dispositif d'affichage et de commande (3) destiné à un véhicule (1) comportant un dispositif d'affichage (2) sensiblement rectangulaire destiné à afficher et/ou commander des groupes de fonctions et/ou des fonctions représentés et un dispositif de commande (9) qui est réalisé afin de générer sur le dispositif d'affichage (2) des données graphiques de manière à ce qu'au moins une partie des informations représentées soient des éléments de commande destinés à la sélection de groupes de fonctions et/ou de fonctions, dans lequel les éléments de commande sont réalisés sous la forme de surfaces de commutation (15, 19),
**caractérisé en ce que** le dispositif de commande est en outre réalisé afin que des données graphiques puissent être générées et/ou soient générées de manière à ce qu'une partie des surfaces de commutation (19) soit représentée aux angles (13) du dispositif d'affichage (2) sensiblement rectangulaire en fonction du groupe de fonctions et/ou de la fonction représenté dans un champ d'information et de fonction (12) et à ce qu'une partie des surfaces de commutation (15) soit représentée indépendamment de cela, dans lequel de nouveaux objets graphiques (18) sont générés dans le champ d'information et de fonction (12) lors de l'actionnement de l'une des surfaces de commutation (15, 19).

13. Dispositif d'affichage et de commande (3) selon la revendication 12,
**caractérisé en ce que** le dispositif de commande est en outre réalisé afin que des données graphiques puissent être générées et/ou soient générées de manière à ce que des éléments de commande réalisés sous la forme de surfaces de commutation (15) soient représentés sur le bord du dispositif d'affichage (2) entre les surfaces de commutation (19) disposées aux angles (13) du dispositif d'affichage (2) sensiblement rectangulaire, et **en ce que** ceux-ci sont les éléments de commande qui sont disposés de manière à ce qu'ils soient représentés indépendamment du groupe de fonctions et/ou de la fonction représenté et pouvant être commandé dans le champ d'information et de fonction (12).

14. Dispositif d'affichage et de commande (3) selon les revendications 12 ou 13,
**caractérisé en ce que** le dispositif de commande est en outre réalisé afin que des données graphiques puissent être générées et/ou soient générées de manière à ce qu'au moins une surface de commutation (19) représentée aux angles du dispositif d'affichage soit prévue pour la sélection de groupes de fonctions et/ou de fonctions fixes, indépendamment du groupe de fonctions représenté et pouvant être commandé dans le champ d'information et de fonction (12).

15. Dispositif d'affichage et de commande (3) selon l'une quelconque des revendications 12 à 14, **caractérisé en ce que** le dispositif de commande est en outre réalisé afin que des données graphiques puissent être générées et/ou soient générées de manière à ce que deux des éléments de commande (15) représentés sur le bord du dispositif d'affichage et réalisés sous la forme de surfaces de commutation soient prévus pour la sélection de groupes de fonctions et/ou de fonctions fixes, indépendamment du groupe de fonctions représenté et pouvant être commandé dans le champ d'information et de fonction (12) .

16. Dispositif d'affichage et de commande (3) selon les revendications 12 à 15,
**caractérisé en ce que** le dispositif de commande est en outre réalisé afin que des données graphiques puissent être générées et/ou soient générées de manière à ce que deux des surfaces de commutation (19) représentées aux angles du dispositif d'affichage soient prévues pour la sélection de différents groupes de fonctions et/ou de différentes fonctions en fonction du groupe de fonctions représenté et pouvant être commandé dans le champ d'information et de fonction (12).

17. Dispositif d'affichage et de commande (3) selon l'une quelconque des revendications 12 à 16, **caractérisé en ce que** le dispositif de commande est en outre réalisé afin que des données graphiques puissent être générées et/ou soient générées de manière à ce que deux des éléments de commande (15) représentés sur le bord du dispositif d'affichage et réalisés sous la forme de surfaces de commutation soient prévus pour la sélection de différents groupes de fonctions et/ou de différentes fonctions en fonction du groupe de fonctions représenté et pouvant être commandé dans le champ d'information et de fonction (12).

18. Dispositif d'affichage et de commande (3) selon l'une quelconque des revendications 12 à 17, **caractérisé en ce que** le dispositif de commande est en outre réalisé afin que des données graphiques puissent être générées et/ou soient générées de manière à ce qu'un actionnement réussi des surfaces de commutation (15, 19) par un objet d'actionnement (7) provoque une modification de la représentation graphique des surfaces de commutation (19, 15) pendant l'actionnement.

19. Dispositif d'affichage et de commande (3) selon l'une quelconque des revendications 12 à 18, **caractérisé en ce que** le dispositif de commande est en outre réalisé afin que des données graphiques puissent être générées et/ou soient générées de manière à ce qu'une activation permanente d'une fonction de l'une des surfaces de commutation (15, 19) provoque une modification de la représentation graphique des surfaces de commutation (19, 15).

20. Dispositif d'affichage et de commande (3) selon les revendications 12 à 19,
**caractérisé en ce que** le dispositif de commande est en outre réalisé afin que des données graphiques puissent être générées et/ou soient générées de manière à ce que la modification de la représentation graphique soit générée sur les surface de commutation (15, 19) par un indicateur (17) qui modifie entièrement ou partiellement sa couleur et/ou son intensité lumineuse.

21. Dispositif d'affichage et de commande (3) selon les revendications 12 à 20,
**caractérisé en ce que** le dispositif d'affichage (2) sensiblement rectangulaire comporte une surface tactile (8) .

22. Dispositif d'affichage et de commande (3) selon les revendications 12 à 21,
**caractérisé en ce que** l'objet d'actionnement (7) est un élément de commande multifonction destiné à commander les groupes de fonctions et/ou les fonctions.
